# EUROPEAN PATENT APPLICATION

(11) **EP 4 790 555 A2**
(43) Date of publication of application: **12.08.2026**
(21) Application number: 26168652.1
(22) Date of filing: 27.03.2026
(51) Int. Cl.: G06F 9/48, G06F 9/455

(54) **DEVICE MIGRATION METHOD AND APPARATUS, ELECTRONIC DEVICE, AND STORAGE MEDIUM**

(30) Priority: 17.11.2025 CN 202511681672
(71) Applicant: XG TECH PTE. LTD., Singapore 179098 (SG)
(72) Inventor: LIN, Tao, 179098 Singapore (SG); GAO, Junhao, 179098 Singapore (SG); DENG, Jie, 179098 Singapore (SG); TAO, Xinzhi, 179098 Singapore (SG); CHEN, Zhou, 179098 Singapore (SG)
(74) Representative: v. Bezold & Partner Patentanwälte - PartG mbB

(57) **Abstract**

Disclosed are a device migration method and apparatus, an electronic device, and a storage medium, relating to the technical field of computers. The method includes: transmitting, by a first virtual machine, a request message requesting use of a target device to a second virtual machine; comparing a first priority for the first virtual machine to use the target device and a second priority for the second virtual machine to use the target device in a case where the second virtual machine is in a pass-through connection with the target device; in response to the first priority being higher than the second priority, releasing first pass-through binding between the second virtual machine and the target device; and sending a migration message to the first virtual machine, to instruct the first virtual machine to perform a second pass-through binding to the target device.

## Description

### FIELD OF THE INVENTION

The present disclosure relates to the technical field of computers, and in particular, to a device migration method and apparatus, an electronic device, and a storage medium.

### BACKGROUND OF THE INVENTION

Currently, a virtual machine may access a physical device through device pass-through or a virtualization technology (such as a full-virtualization technology for simulating a device through Hypervisor, or a semi-virtualization technology such as Virtio) to obtain resources on the physical device. In a case of accessing the physical device through device pass-through, one physical device can only be used by one virtual machine, and resources on the one physical device cannot be shared by a plurality of virtual machines, resulting in low utilization of the resources on the physical device. In a case of accessing the physical device through the virtualization technology, although resources on one physical device can be shared by a plurality of virtual machines, the resources on the physical device may be competed for or partitioned for use by the plurality of virtual machines, resulting in limited resources available to each virtual machine.

### SUMMARY OF THE INVENTION

To resolve the foregoing technical problem, the present disclosure provides a device migration method and apparatus, an electronic device, and a storage medium. Resources on a physical device are dynamically adjusted when the physical device is used by virtual machines, so that the physical device may be exclusively used by a single virtual machine, or may be migrated between a plurality of virtual machines to be shared and used by the plurality of virtual machines, which improves resource utilization of the physical device and enables the virtual machine to obtain more resources as required, thereby significantly improving operational efficiency of the virtual machine.

According to a first aspect of the present disclosure, a device migration method is provided, including: transmitting, by a first virtual machine, a request message requesting use of a target device to a second virtual machine; comparing a first priority for the first virtual machine to use the target device and a second priority for the second virtual machine to use the target device in a case where the second virtual machine is in a pass-through connection with the target device; in response to the first priority being higher than the second priority, releasing first pass-through binding between the second virtual machine and the target device; and sending a migration message to the first virtual machine, to instruct the first virtual machine to perform a second pass-through binding to the target device.

According to a second aspect of the present disclosure, a device migration apparatus is provided, including: a transmission module, a comparison module, a pass-through release module, and a sending module.

The transmission module is configured to transmit, by a first virtual machine, a request message requesting use of a target device to a second virtual machine. The comparison module is configured to compare a first priority for the first virtual machine to use the target device and a second priority for the second virtual machine to use the target device in a case where the second virtual machine is in a pass-through connection with the target device. The pass-through release module is configured to, in response to the first priority being higher than the second priority, release first pass-through binding between the second virtual machine and the target device. The sending module is configured to send a migration message to the first virtual machine, to instruct the first virtual machine to perform a second pass-through binding to the target device.

According to a third aspect of the present disclosure, a computer readable storage medium is provided. The storage medium stores a computer program, which is used for implementing the device migration method according to the first aspect of the present disclosure.

According to a fourth aspect of the present disclosure, an electronic device is provided. The electronic device includes: a processor; and a memory configured to store instructions executable by the processor, wherein the processor is configured to read the executable instructions from the memory, and execute the instructions to implement the device migration method according to the first aspect of the present disclosure.

According to a fifth aspect of the present disclosure, a computer program product is provided. When instructions in the computer program product are executed by a processor, the device migration method according to the first aspect of the present disclosure is implemented.

According to the technical solutions provided in the embodiments of the present disclosure, the request message requesting the use of the target device can be transmitted to the second virtual machine by the first virtual machine; the first priority for the first virtual machine to use the target device and the second priority for the second virtual machine to use the target device can be compared in a case where the second virtual machine is in a pass-through connection with the target device; and then, the first pass-through binding between the second virtual machine and the target device can be released in response to the first priority being higher than the second priority; and finally, the migration message can be sent to the first virtual machine, to instruct the first virtual machine to perform the a second pass-through binding to the target device. It may be learned that according to the embodiments of the present disclosure, migration of the physical device between a plurality of virtual machines can be controlled based on priorities for different virtual machines to use the physical device. When migrated to a certain virtual machine, the physical device can be exclusively used by that virtual machine. In this case, the physical device may be exclusively used by a single virtual machine, or may be migrated between a plurality of virtual machines to be shared and used by the plurality of virtual machines, which improves resource utilization of the physical device and enables the virtual machine to obtain more resources as required, thereby significantly improving operational efficiency of the virtual machine.

### BRIEF DESCRIPTION OF THE DRAWINGS

FIG. 1 is a diagram illustrating a system to which the present disclosure is applicable;
FIG. 2 is a schematic flowchart illustrating a device migration method according to an exemplary embodiment of the present disclosure;
FIG. 3 is a schematic flowchart illustrating a device migration method according to another exemplary embodiment of the present disclosure;
FIG. 4 is a schematic diagram illustrating a data exchange process in a device migration method according to an exemplary embodiment of the present disclosure;
FIG. 5 is a schematic diagram illustrating a data exchange process in a device migration method according to another exemplary embodiment of the present disclosure;
FIG. 6 is a schematic diagram illustrating a data exchange process in a device migration method according to still another exemplary embodiment of the present disclosure;
FIG. 7 is a schematic diagram illustrating a structure of a device migration apparatus according to an exemplary embodiment of the present disclosure;
FIG. 8 is a schematic diagram illustrating a structure of a device migration apparatus according to another exemplary embodiment of the present disclosure; and
FIG. 9 is a diagram illustrating a structure of an electronic device according to an exemplary embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that, unless otherwise specifically stated, the relative arrangement of components and steps, numerical expressions, and numerical values set forth in these embodiments do not limit the scope of the present disclosure.

### Application overview

During operation, a virtual machine needs to obtain resources from physical devices to execute a computing task. Generally, when more resources are obtained from the physical devices by the virtual machine, the virtual machine has a stronger capability of executing the computing task, and has higher operational efficiency. Demand of the virtual machine for the resources on the physical devices during the operation changes dynamically. When the demand of the virtual machine for the resources on the physical devices increases, the virtual machine may require resources from a plurality of physical devices to support the execution of the computing task. When the demand of the virtual machine for the resources on the physical devices decreases, the virtual machine may only require resources on one physical device to efficiently complete the computing task.

In related technologies, the virtual machine may obtain the resources on the physical devices in two ways. A first way is device pass-through, and a second way is a virtualization technology. If the virtual machine obtains the resources on the physical devices in the first way, to meet a requirement that the virtual machine requires resources on a plurality of physical devices to support the execution of the computing task, the virtual machine needs to exclusively use a plurality of physical devices by means of device pass-through. In this case, other virtual machines cannot use any one of the plurality of physical devices. When the demand of the virtual machine for the resources on the physical devices decreases, the virtual machine may only need to use the resources on one of the plurality of physical devices. In this case, the resources on other physical devices in the plurality of physical devices cannot be used by other virtual machines, resulting in a decrease in resource utilization of the physical devices. If the virtual machine obtains the resources on the physical devices in the second way, the resources on one physical device may be partitioned and used by a plurality of virtual machines, and thus the requirement that the virtual machine requires resources on a plurality of physical devices to support the execution of the computing task cannot be met. As a result, the resources obtained by the virtual machine from the physical devices are insufficient to support the virtual machine to execute the computing task, resulting in low operational efficiency of the virtual machine. In this case, duration of executing the computing task by the virtual machine is extended, and in a severe case, a failure or termination of the computing task may even be caused.

It may be learned that in the related technologies, there are only two ways for the virtual machine to obtain the resources on the physical devices, and the virtual machine can only select one from the two ways for use during operation, resulting in low resource utilization of the physical device during the operation of the virtual machine or low operational efficiency of the virtual machine. If it is possible to allow the virtual machine to exclusively use the physical device during the operation, and also allow the physical device to be shared by a plurality of virtual machines without partitioning the resources on the physical device, the foregoing problem of low resource utilization of the physical device during the operation of the virtual machine or low operational efficiency of the virtual machine can be effectively resolved. Regarding this problem, the embodiments of the present disclosure provide a device migration method and apparatus, an electronic device, and a storage medium, so that the virtual machine is allowed to exclusively use the physical device during the operation, and also the physical device is allowed to be shared by a plurality of virtual machines without partitioning the resources on the physical device, thereby effectively improving the resource utilization of the physical device during the operation of the virtual machine, and improving the operational efficiency of the virtual machine.

### Exemplary system

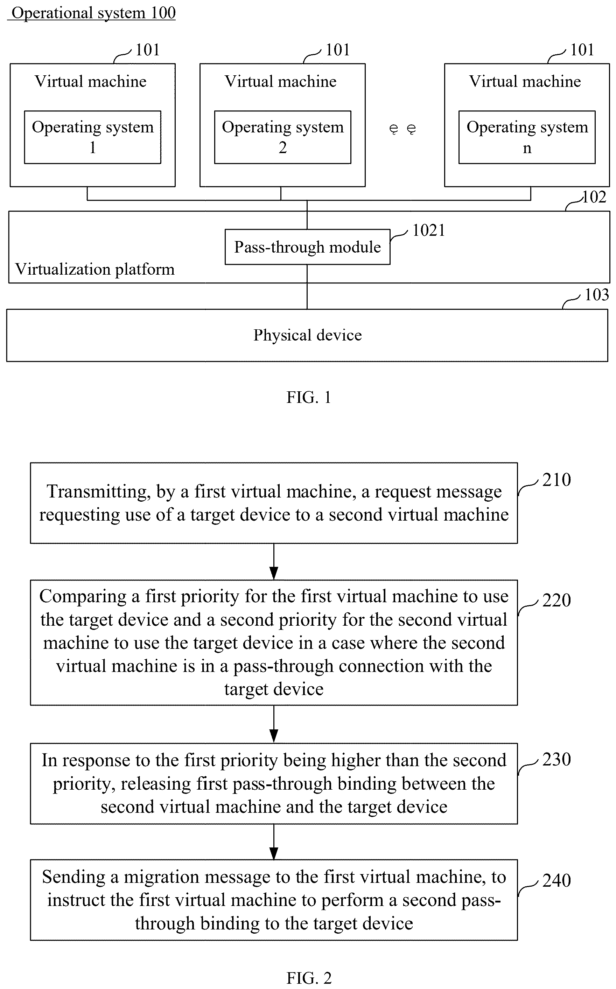

FIG. 1 is a diagram illustrating a system to which the present disclosure is applicable. As shown in FIG. 1, an operational system 100 includes a plurality of virtual machines 101, a virtualization platform 102, and a physical device 103.

An operating system (such as an operating system 1, an operating system 2, ..., or an operating system n (where n is a natural number greater than or equal to 2) in FIG. 1) may run on the virtual machine 101. The operating system may be an embedded system, such as an intelligent automotive electronic control system or an industrial automation control system.

For example, the intelligent automotive electronic control system may be an intelligent cockpit system, an automatic driving system, or an onboard cockpit-driving integrated system that integrates an intelligent cockpit function and an automatic driving function into a high-performance computing unit. The industrial automation control system may be, for example, an industrial robot control system or a production line automation control system.

Operating systems running on different virtual machines 101 may be same or different. For example, in FIG. 1, any two operating systems among the operating system 1, the operating system 2, ..., and the operating system n (where n is a natural number greater than or equal to 2) may be same or different operating systems.

The virtualization platform 102 runs virtualization software (such as a Hypervisor, and the virtualization software is not shown in FIG. 1), which includes a pass-through module 1021. The virtual machine 101 may perform pass-through with the physical device 103 through the pass-through module 1021, to obtain resources directly from the physical device 103. The plurality of virtual machines 101 are created and managed by the virtualization platform 102.

The physical device 103 may be, for example, a device that can perform pass-through with the virtual machine 101, such as a graphics card, a network interface card (NIC), a storage device (such as a hard disk drive (HDD) or a solid state drive (SSD)), a universal serial bus (USB) controller (such as a printer or a scanner), an input/output (I/O) device, or an audio device.

It should be noted that only one physical device 103 is shown as an example in FIG. 1. In the embodiments of the present disclosure, there may be a plurality of physical devices 103.

### Exemplary method

FIG. 2 is a schematic flowchart illustrating a device migration method according to an exemplary embodiment of the present disclosure. This embodiment may be applied to a terminal device where a virtual machine 101 is located. As shown in FIG. 2, the device migration method may include the following S210 to S240.

S210: Transmitting, by a first virtual machine, a request message requesting use of a target device to a second virtual machine.

The first virtual machine and the second virtual machine are different virtual machines, and are managed by a same virtualization platform. To be specific, the first virtual machine is managed by the virtualization platform, which also manages at least one target virtual machine other than the first virtual machine. The second virtual machine is any one of the one or more target virtual machines described above. The target device is the physical device 103 described above.

The first virtual machine is not in a pass-through connection with the target device. In a case where the first virtual machine requires resources of the target device, the request message requesting the use of the target device is transmitted to the at least one target virtual machine by the first virtual machine, so as to request a target virtual machine, in the at least one target virtual machine, that is in a pass-through connection with the target device to use the target device.

S220: Comparing a first priority for the first virtual machine to use the target device and a second priority for the second virtual machine to use the target device in a case where the second virtual machine is in a pass-through connection with the target device.

The second virtual machine may or may not be in a pass-through connection with the target device. In a case where in a pass-through connection with the target device, the second virtual machine exclusively uses the resources of the target device. In this case, the first virtual machine cannot use the resources of the target device. To determine whether the first virtual machine has priority over the second virtual machine in using the resources of the target device, the first priority for the first virtual machine to use the target device and the second priority for the second virtual machine to use the target device is compared based on the preset first priority for the first virtual machine to use the target device and the second priority for the second virtual machine to use the target device. Whether the first virtual machine can use the resources of the target device preferentially is determined based on a comparison result between the first priority and the second priority.

The first priority for the first virtual machine to use the target device and the second priority for the second virtual machine to use the target device may be set according to an actual situation, which is not limited in this embodiment of the present disclosure.

It should be noted that when setting priorities for the virtual machines to use the target device, a priority may be set for each virtual machine. For example, the first priority of the first virtual machine is set to priority 1 and the second priority of the second virtual machine is set to priority 2. In this case, the first priority for the first virtual machine to use any physical device is the priority 1, and the second priority for the second virtual machine to use any physical device is the priority 2. In other words, the priority for the virtual machine to use the target device is independent of the target device, and would not change with the target device.

For example, if the target device is a physical device 1 (such as a graphics card), the first priority for the first virtual machine to use the target device is the priority 1, and the second priority for the second virtual machine to use the target device is the priority 2. If the target device is a physical device 2 (such as a network interface card), the first priority for the first virtual machine to use the target device is still the priority 1, and the second priority for the second virtual machine to use the target device is still the priority 2. In other words, regardless of whether the target device changes, the first priority for the first virtual machine to use the target device and the second priority for the second virtual machine to use the target device would not change.

When setting the priorities for the virtual machines to use the target device, the priorities of a plurality of virtual machines may also be set based on a priority order of the plurality of virtual machines when using the target device. For example, the priorities for a plurality of virtual machines to use the physical device 1 is set based on a priority order of the plurality of virtual machines using the physical device 1, and the priorities for the plurality of virtual machines to use the physical device 2 is set based on a priority order of the plurality of virtual machines using the physical device 2. In a case where the priority order of the plurality of virtual machines to use physical device 1 is different from the priority order of the plurality of virtual machines to use physical device 2, the priorities for the virtual machines to use the target devices may change with different target devices.

For example, if the target device is the physical device 1 (such as the graphics card), the priority orders for the first virtual machine and the second virtual machine to use the physical device 1 is that the first virtual machine is prior to the second virtual machine. In this case, the first priority for the first virtual machine to use the physical device 1 is the priority 1, and the second priority for the second virtual machine to use the physical device 1 is the priority 2, wherein the priority 1 is higher than the priority 2. For example, if the target device is the physical device 2 (such as the network interface card), the priority orders for the first virtual machine and the second virtual machine to use the physical device 2 is that the second virtual machine is prior to the first virtual machine. In this case, the first priority for the first virtual machine to use the physical device 2 is the priority 2, and the second priority for the second virtual machine to use the physical device 2 is the priority 1. In other words, if the target device changes, the first priority for the first virtual machine to use the target device and the second priority for the second virtual machine to use the target device also change the target device.

In a case where the second virtual machine is not in a pass-through connection with the target device, the second virtual machine does not respond to the request message requesting the use of the target device.

S230: In response to the first priority being higher than the second priority, releasing first pass-through binding between the second virtual machine and the target device.

In a case where the first priority is higher than the second priority, the first virtual machine may preferentially use the resources of the target device. In this case, the first pass-through binding between the second virtual machine and the target device may be released by the second virtual machine, so that virtual machines other than the second virtual machine can use the resources of the target device.

S240: Sending a migration message to the first virtual machine, to instruct the first virtual machine to perform a second pass-through binding to the target device.

The migration message may be sent to the first virtual machine by the second virtual machine, to enable the first virtual machine to perform a second pass-through binding to the target device based on the migration message, so that the first virtual machine can use the resources of the target device.

It may be learned from S210 to S240 that, the target device may be exclusively used by either the first virtual machine or the second virtual machine, or may be migrated between the first virtual machine and the second virtual machine to be shared by the first virtual machine and the second virtual machine. In this case, the virtual machine can obtain more resources as required, thereby effectively improving the resource utilization of the physical device and improving operational efficiency of the virtual machine.

According to device migration method provided in the embodiments of the present disclosure, the request message requesting the use of the target device can be transmitted to the second virtual machine by the first virtual machine; the first priority for the first virtual machine to use the target device and the second priority for the second virtual machine to use the target device can be compared in a case where the second virtual machine is in a pass-through connection with the target device; and then, the first pass-through binding between the second virtual machine and the target device can be released in response to the first priority being higher than the second priority; and finally, the migration message can be sent to the first virtual machine, to instruct the first virtual machine to perform the second pass-through binding to the target device. It may be learned that according to the embodiments of the present disclosure, migration of the physical device between a plurality of virtual machines can be controlled based on priorities for different virtual machines to use the physical device. When migrated to a certain virtual machine, the physical device can be exclusively used by that virtual machine. In this case, the physical device may be exclusively used by a single virtual machine, or may be migrated between a plurality of virtual machines to be shared and used by the plurality of virtual machines, which improves the resource utilization of the physical device and enables the virtual machine to obtain more resources as required, thereby significantly improving the operational efficiency of the virtual machine.

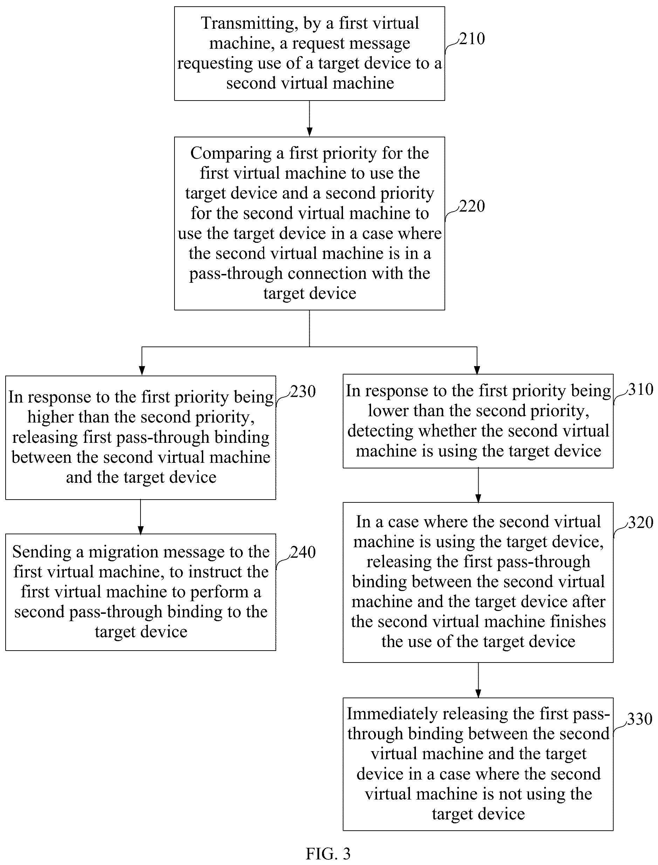

FIG. 3 is a schematic flowchart illustrating a device migration method according to another exemplary embodiment of the present disclosure. As shown in FIG. 3, S310 to S330 may further be executed after S220 is executed.

S310: In response to the first priority being lower than the second priority, detecting whether the second virtual machine is using the target device.

After the first priority is compared with the second priority, if the first priority is lower than the second priority, the first virtual machine does not have priority over the second virtual machine in using the resources of the target device. In this case, whether the second virtual machine is using the target device is further detected, so as to determine whether the resources of the target device are in an idle status.

S320: In a case where the second virtual machine is using the target device, releasing the first pass-through binding between the second virtual machine and the target device after the second virtual machine finishes the use of the target device.

If the second virtual machine is using the target device, it indicates that the resources of the target device are being occupied by the second virtual machine. Since the first priority is lower than the second priority, in this case, the first virtual machine does not have priority over the second virtual machine in using the resources of the target device, and it waits for the second virtual machine to finish the use of the target device. After the second virtual machine finishes the use of the target device, the first pass-through binding between the second virtual machine and the target device is released by the second virtual machine, without affecting a process of using the resources of the target device by the second virtual machine.

S330: Immediately releasing the first pass-through binding between the second virtual machine and the target device in a case where the second virtual machine is not using the target device.

If the second virtual machine is not using the target device, it indicates that the resources of the target device are in the idle status. In this case, the first pass-through binding between the second virtual machine and the target device is immediately released by the second virtual machine, so that virtual machines other than the second virtual machine can immediately use the resources of the target device.

After S330 is executed, it is possible to continue to execute S240, so that the first virtual machine can directly perform a second pass-through binding to the target device when the target device is not in a pass-through connection with other virtual machines, thereby enabling the first virtual machine to use the resources of the target device.

It may be learned that in the embodiments of the present disclosure, in a case where the first virtual machine needs to use the resources of the target device but does not have priority over the second virtual machine in using the resources of the target device, the target device can be migrated from the second virtual machine to the first virtual machine in a case where the second virtual machine finishes the use of the target device or the second virtual machine is not using the target device, so as to release the first pass-through binding between the second virtual machine and the target device without affecting normal operation of the second virtual machine. Thus, the first virtual machine can use the resources of the target device, thereby improving the resource utilization of the physical device without affecting the normal operation of the virtual machine.

In some embodiments, the transmitting, by a first virtual machine, a request message requesting use of a target device to a second virtual machine may include: transmitting, based on a shared storage mechanism by the first virtual machine, the request message requesting the use of the target device to the second virtual machine.

The shared storage mechanism is a mechanism for inter-process communication (IPC), and allows a plurality of processes to access a same memory area. Data from different processes is directly shared in this memory area, so that a large amount of data can be quickly transferred between the processes.

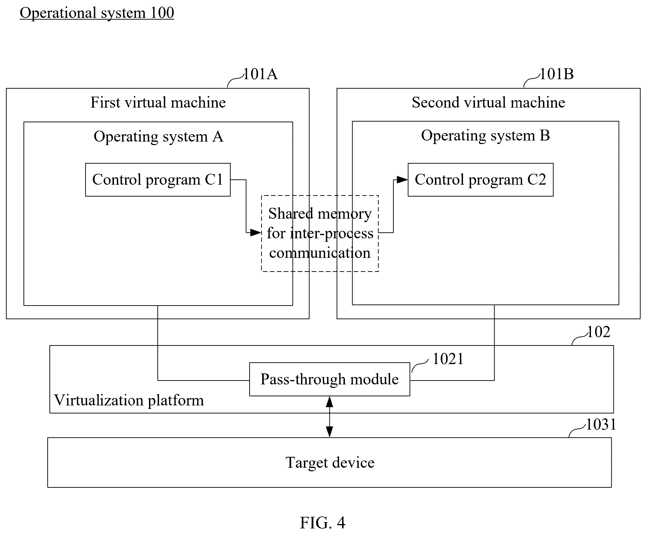

For example, as shown in FIG. 4, an operational system 100 includes a first virtual machine 101A, a second virtual machine 101B, a virtualization platform 102, a pass-through module 1021, and a target device 1031. An operating system A runs in the first virtual machine 101A, an operating system B runs in the second virtual machine 101B, a control program C1 runs in the operating system A, and a control program C2 runs in the operating system B.

The control program C1 may be a user mode program in the operating system A that needs to communicate with other processes, and the control program C2 may be a user mode program in the operating system B that needs to communicate with other processes. When the request message requesting the use of the target device is transmitted to the second virtual machine by the first virtual machine, reference may be made to an arrow between the control program C1 and a shared memory for inter-process communication and an arrow between the shared memory for inter-process communication and the control program C2 in FIG. 4. A direction of the arrow represents a direction of message transmission. As shown in FIG. 4, the control program C1 is first used to send the request message requesting the use of the target device to the shared memory for inter-process communication. Subsequently, control programs on other virtual machines may receive the request message requesting the use of the target device by the shared memory for inter-process communication. The control program C2 running in the operating system B on the second virtual machine 101B receives the request message requesting the use of the target device by using the shared memory for inter-process communication.

Transmitting the request message requesting the use of the target device based on the shared storage mechanism can efficiently share data and request resources between the first virtual machine and the second virtual machine, thereby improving processing efficiency.

In some embodiments, the process of releasing the first pass-through binding between the second virtual machine and the target device may be implemented in the following way: sending an unbinding instruction to a pass-through module in a virtualization platform, to instruct the pass-through module to release the first pass-through binding based on the unbinding instruction.

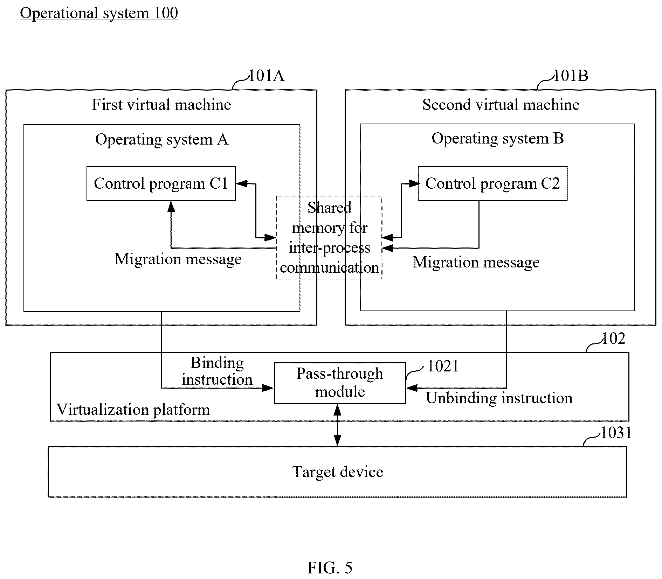

For example, as shown in FIG. 5, a direction of an arrow in FIG. 5 represents a direction of message transmission. When releasing the first pass-through binding between the second virtual machine and the target device, the unbinding instruction may be sent to the pass-through module 1021 in the virtualization platform 102 by the operating system B in the second virtual machine 101B. After receiving the unbinding instruction, the pass-through module 1021 releases the first pass-through binding between the second virtual machine 101B and the target device 1031 based on the unbinding instruction.

In some embodiments, the sending a migration message to the first virtual machine, to instruct the first virtual machine to perform a second pass-through binding to the target device may include: sending the migration message to the first virtual machine, to instruct the first virtual machine to respond to the migration message and send a binding instruction to the pass-through module in the virtualization platform, so as to instruct the pass-through module to perform the second pass-through binding between the target device and the first virtual machine according to the binding instruction.

For example, referring to FIG. 5 again, after the first pass-through binding between the second virtual machine and the target device is released, the migration message may be sent to the shared memory for inter-process communication through the control program C2 in the second virtual machine 101B, and then the migration message may be obtained from the shared memory for inter-process communication through the control program C1 in the first virtual machine 101A. In this case, after the first pass-through binding between the second virtual machine and the target device is released, the first virtual machine may be notified to perform the second pass-through binding to the target device.

There is a driver program running in the operating system that runs on the virtual machine. The driver program is used for interaction between the operating system and the physical device, so as to implement interaction between the virtual machine and the physical device. Therefore, in some embodiments, the sending an unbinding instruction to a pass-through module in a virtualization platform, to instruct the pass-through module to release the first pass-through binding based on the unbinding instruction may include: calling a first driver program to send the unbinding instruction to the pass-through module in the virtualization platform, to instruct the pass-through module to release the first pass-through binding based on the unbinding instruction.

It should be noted that the first driver program runs in the operating system of the second virtual machine.

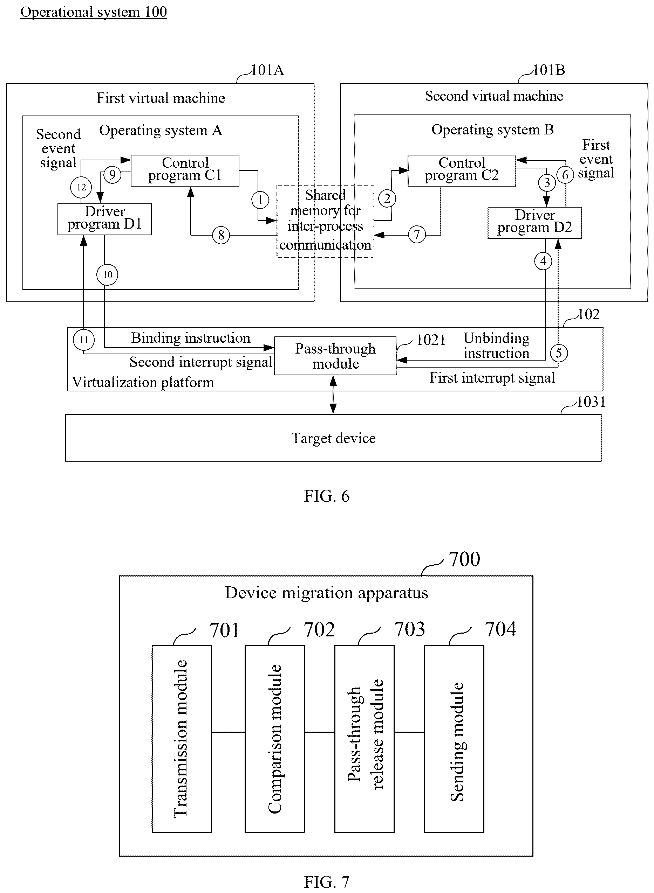

For example, as shown in FIG. 6, a direction of an arrow in FIG. 6 represents a direction of message transmission, and a number on the arrow represents an execution order. Referring to FIG. 6, first, the request message requesting the use of the target device is sent to the shared memory for inter-process communication through the control program C1 in the first virtual machine 101A (corresponding to a flow corresponding to an arrow with a number ①), and then the request message requesting the use of the target device is received from the shared memory for inter-process communication through the control program C2 in the second virtual machine 101B (corresponding to a flow corresponding to an arrow with a number ②). Subsequently, whether the second virtual machine 101B is in pass-through binding to the target device is determined through the control program C2 (a specific determining manner may be set by a person skilled in the art according to an actual situation, and is not limited in the embodiments of the present disclosure). If it is determined through the control program C2 that the second virtual machine 101B is in pass-through binding to the target device 1031 (that is, the second virtual machine 101B currently exclusively uses the target device 1031), as shown in FIG. 6, the control program C2 in the second virtual machine 101B is used to call a driver program D2 running in the operating system B (corresponding to a flow corresponding to an arrow with a number ③), and the unbinding instruction is sent to the pass-through module 1021 by calling the driver program D2 (corresponding to a flow corresponding to an arrow with a number ④).

It should be noted that FIG. 6 only shows a situation where it is determined through the control program C2 that the second virtual machine 101B is in pass-through binding to the target device 1031. If it is determined through the control program C2 that the second virtual machine 101B is not in pass-through binding to the target device 1031, the control program C2 does not respond to the received request message requesting the use of the target device, to end this flow.

In some embodiments, based on the driver program in the operating system of the virtual machine, the process of sending the migration message to the first virtual machine, to instruct the first virtual machine to respond to the migration message and send a binding instruction to the pass-through module in the virtualization platform, so as to instruct the pass-through module to perform the second pass-through binding between the target device and the first virtual machine according to the binding instruction may include: receiving a first event signal that is sent by the first driver program under triggering of a first interrupt signal, wherein the pass-through module sends the first interrupt signal to the first driver program in a case where the first pass-through binding is successfully released; and in response to the first event signal, sending the migration message to the first virtual machine based on the shared storage mechanism, to instruct the first virtual machine to respond to the migration message and send the binding instruction to the pass-through module in the virtualization platform by calling a second driver program, so as to instruct the pass-through module to perform the second pass-through binding between the target device and the first virtual machine according to the binding instruction. The first virtual machine receives a second event signal that is sent by the second driver program under triggering of a second interrupt signal, and uses the target device in response to the second event signal. The pass-through module sends the second interrupt signal to the second driver program in a case where the second pass-through binding is successfully completed.

It should be noted that the second driver program runs in the operating system of the first virtual machine. The first interrupt signal may be considered as a signal that calls an interrupt handling routine of the first driver program, and is used to instruct the first driver program to send the first event signal to the control program in the second virtual machine. The first event signal is used to instruct the control program in the second virtual machine to send the migration message to the first virtual machine. The second interrupt signal may be considered as a signal that calls an interrupt handling routine of the second driver program, and is used to instruct the second driver program to send the second event signal to the control program in the first virtual machine. The second event signal is used to instruct the control program in the first virtual machine to start the use of the target device.

For example, as shown in FIG. 6, the unbinding instruction is sent to the pass-through module 1021 by calling the driver program D2 (corresponding to the first driver program described above), to instruct the pass-through module 1021 to release the first pass-through binding between the second virtual machine 101B and the target device 1031. In a case where the first pass-through binding is successfully released, the pass-through module 1021 sends the first interrupt signal to the driver program D2 in the second virtual machine 101B (corresponding to a flow corresponding to an arrow with a number ⑤). The driver program D2 sends the first event signal to the control program C2 in the second virtual machine 101B under the triggering of the first interrupt signal (corresponding to a flow corresponding to an arrow with a number ⑥). In response to the first event signal, the control program C2 sends the migration message to the shared memory for inter-process communication (corresponding to a flow corresponding to an arrow with a number ⑦). The control program C1 in the first virtual machine 101A receives the migration message through the shared memory for inter-process communication (corresponding to a flow corresponding to an arrow with a number ⑧). The control program C1 calls the driver program D1 in the first virtual machine based on the migration message (corresponding to a flow corresponding to an arrow with a number ⑨), and sends the binding instruction to the pass-through module 1021 through the driver program D1 (corresponding to the second driver program described above) (corresponding to a flow corresponding to an arrow with a number ⑩), to instruct the pass-through module 1021 to perform the second pass-through binding between the first virtual machine 101A and the target device 1031. In a case where the second pass-through binding is successfully completed, the pass-through module 1021 sends the second interrupt signal to the driver program D1 in the first virtual machine (corresponding to a flow corresponding to an arrow with a number ⑪). The river program D1 sends the second event signal to the control program C1 in the first virtual machine 101A under the triggering of the second interrupt signal (corresponding to a flow corresponding to an arrow with a number ⑫). In response to the second event signal, the control program C1 controls the first virtual machine 101A to use the target device 1031.

The process of releasing the first pass-through binding by the pass-through module 1021 may be as follows: the pass-through module 1021 first releases a mapping relationship between the second virtual machine and memory of the target device; and then, deletes an interrupt routing configuration that is currently assigned to the second virtual machine by the target device, to ensure that the second virtual machine no longer receives interrupt signals sent from the target device; and finally, releases a data stream for direct memory access (DMA) in a system memory management unit (SMMU), to ensure that the second virtual machine would not access memory space of other virtual machines, thereby implementing secure isolation of data during a migration process of the target device.

The process of performing the second pass-through binding by the pass-through module 1021 may be as follows: the pass-through module 1021 first establishes a mapping relationship between the first virtual machine and memory of the target device memory; and then, the pass-through module 1021 adds an interrupt routing configuration that is currently assigned to the first virtual machine by the target device, to ensure that the first virtual machine can receive the interrupt signal sent from the target device; and finally, the pass-through module 1021 enables the data stream for SMMU DMA to support the first virtual machine to directly access the target device.

In some embodiments, the device migration method in the embodiments of the present disclosure may be applied to scenarios in the field of onboard cockpit-driving integration. In the field of onboard cockpit-driving integration, functional modules of an intelligent cockpit domain and functional modules of an intelligent driving domain may run on different virtual machines. The first virtual machine may be the virtual machine on which the functional modules of the intelligent cabin domain run, and the second virtual machine may be the virtual machine on which the functional modules of the intelligent driving domain run. In this case, migration of physical devices between the virtual machine on which the functional modules of the intelligent cabin domain run and the virtual machine on which the functional modules of the intelligent driving domain run may be implemented to maximize the utilization of resources of physical devices, enable the virtual machine on which the functional modules of the intelligent driving domain run and the virtual machine on which the functional modules of the intelligent cabin domain run to obtain more resources on demand, and effectively improve the operating efficiency of virtual machines in scenarios in the field of in-vehicle cabin-driving integration.

### Exemplary apparatus

FIG. 7 is a schematic diagram illustrating a structure of a device migration apparatus according to an exemplary embodiment of the present disclosure. As shown in FIG. 7, a device migration apparatus 700 includes a transmission module 701, a comparison module 702, a pass-through release module 703, and a sending module 704.

The transmission module 701 is configured to transmit, by a first virtual machine, a request message requesting use of a target device to a second virtual machine.

The comparison module 702 is configured to compare a first priority for the first virtual machine to use the target device and a second priority for the second virtual machine to use the target device in a case where the second virtual machine is in a pass-through connection with the target device.

The pass-through release module 703 is configured to, in response to the first priority being higher than the second priority, release first pass-through binding between the second virtual machine and the target device.

The sending module 704 is configured to send a migration message to the first virtual machine, to instruct the first virtual machine to perform a second pass-through binding to the target device.

According to device migration apparatus provided in this embodiment of the present disclosure, the request message requesting the use of the target device can be transmitted to the second virtual machine by the first virtual machine; the first priority for the first virtual machine to use the target device and the second priority for the second virtual machine to use the target device can be compared in a case where the second virtual machine is in a pass-through connection with the target device; and then, the first pass-through binding between the second virtual machine and the target device can be released in response to the first priority being higher than the second priority; and finally, the migration message can be sent to the first virtual machine, to instruct the first virtual machine to perform the second pass-through binding to the target device. It may be learned that according to this embodiments of the present disclosure, migration of the physical device between a plurality of virtual machines can be controlled based on priorities for different virtual machines to use the physical device. When migrated to a certain virtual machine, the physical device can be exclusively used by that virtual machine. In this case, the physical device may be exclusively used by a single virtual machine, or may be migrated between a plurality of virtual machines to be shared and used by the plurality of virtual machines, which improves resource utilization of the physical device and enables the virtual machine to obtain more resources as required, thereby significantly improving operational efficiency of the virtual machine.

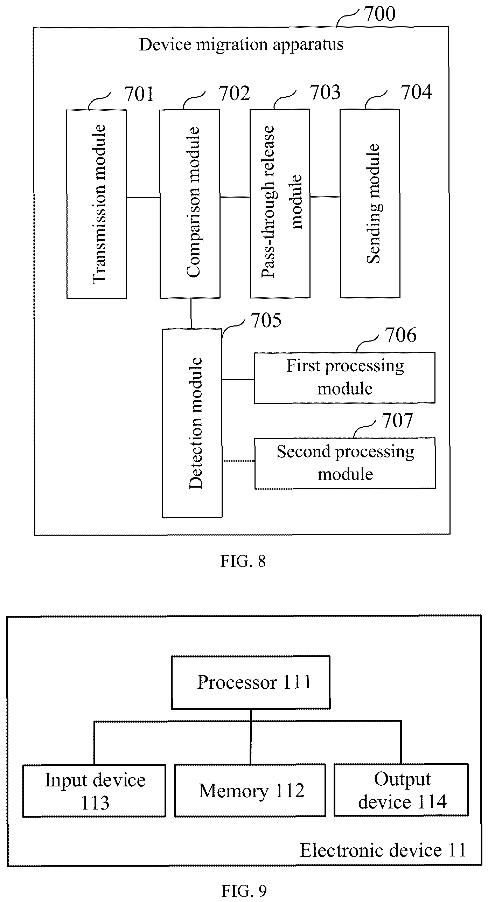

In some optional embodiments, as shown in FIG. 8, the device migration apparatus 700 further includes a detection module 705, a first processing module 706, and a second processing module 707.

The detection module 705 is configured to, in response to the first priority being lower than the second priority, detect whether the second virtual machine is using the target device.

The first processing module 706 is configured to release, in a case where the second virtual machine is using the target device, the first pass-through binding between the second virtual machine and the target device after the second virtual machine finishes the use of the target device.

The second processing module 707 is configured to immediately release the first pass-through binding between the second virtual machine and the target device in a case where the second virtual machine is not using the target device.

In some embodiments, when releasing the first pass-through binding between the second virtual machine and the target device, the pass-through release module 703, the first processing module 706, and the second processing module 707 are specifically configured to: send an unbinding instruction to a pass-through module in a virtualization platform, to instruct the pass-through module to release the first pass-through binding based on the unbinding instruction.

In some embodiments, the sending module 704 is specifically configured to:
send the migration message to the first virtual machine, to instruct the first virtual machine to respond to the migration message and send a binding instruction to the pass-through module in the virtualization platform, so as to instruct the pass-through module to perform the second pass-through binding between the target device and the first virtual machine according to the binding instruction.

In some embodiments, the transmission module 701 is specifically configured to: transmit, based on a shared storage mechanism by the first virtual machine, the request message requesting the use of the target device to the second virtual machine.

In some embodiments, when releasing the first pass-through binding between the second virtual machine and the target device, the pass-through release module 703, the first processing module 706, and the second processing module 707 are specifically configured to: call a first driver program to send the unbinding instruction to the pass-through module in the virtualization platform, to instruct the pass-through module to release the first pass-through binding based on the unbinding instruction.

In some embodiments, the sending module 704 is specifically configured to: receive a first event signal that is sent by the first driver program under triggering of a first interrupt signal, wherein the pass-through module sends the first interrupt signal to the first driver program when the first pass-through binding is successfully released; and in response to the first event signal, send the migration message to the first virtual machine based on the shared storage mechanism, to instruct the first virtual machine to respond to the migration message and send a binding instruction to the pass-through module in the virtualization platform by calling a second driver program, so as to instruct the pass-through module to perform the second pass-through binding between the target device and the first virtual machine according to the binding instruction. The first virtual machine receives a second event signal that is sent by the second driver program under triggering of a second interrupt signal, and uses the target device in response to the second event signal. The pass-through module sends the second interrupt signal to the second driver program in a case where the second pass-through binding is successfully completed.

For beneficial technical effects corresponding to the exemplary embodiment of this apparatus, refer to the corresponding beneficial technical effects of the exemplary method section described above, which are not repeated herein.

### Exemplary electronic device

FIG. 9 is a diagram illustrating a structure of an electronic device according to an embodiment of the present disclosure. The electronic device includes at least one processor 111 and a memory 112.

The processor 111 may be a central processing unit (CPU) or another form of processing unit having a data processing capability and/or an instruction execution capability, and may control another component in the electronic device 11 to perform a desired function.

The memory 112 may include one or more computer program products. The computer program product may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. The computer readable storage medium may store one or more computer program instructions. The processor 111 may execute the one or more computer program instructions to implement the device migration methods and/or other desired functions in the foregoing embodiments of the present disclosure.

In an example, the electronic device 11 may further include an input device 113 and an output device 114. The components are interconnected through a bus system and/or other forms of connection mechanisms (not shown).

The input device 113 may further include, for example, a keyboard or a mouse.

The output device 114 may output various information to the outside, and may include, for example, a display, a loudspeaker, a printer, a communication network, and a remote output device connected to the communication network.

Certainly, for simplicity, only some components in the electronic device 11 that are related to the present disclosure are shown in FIG. 9, and components such as a bus and an input/output interface are omitted. Besides, the electronic device 11 may further include any other appropriate components depending on specific applications.

### Exemplary computer program product and computer readable storage medium

In addition to the foregoing methods and devices, the embodiments of the present disclosure may also provide a computer program product including computer program instructions that, when executed by a processor, cause the processor to implement the steps of the device migration method according to the embodiments of the present disclosure that is described in the foregoing "Exemplary Method" section
The computer program product may be program code, written with one or any combination of a plurality of programming languages, that is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when executed by a processor, cause the processor to perform the steps of the device migration method according to the embodiments of the present disclosure that is described in the foregoing "Exemplary Method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM) or a flash memory, an optical fiber, a portable compact disk read-only memory (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for the embodiments of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and the scope of this application. In this way, if these modifications and variations of this application fall within the scope of the claims and equivalent technologies of the claims of the present disclosure, the present disclosure also intends to include these modifications and variations.

## Claims

1. A device migration method, **characterized in that** the method comprises:
Transmitting (S210), by a first virtual machine, a request message requesting use of a target device to a second virtual machine;
comparing (S220) a first priority for the first virtual machine to use the target device and a second priority for the second virtual machine to use the target device in a case where the second virtual machine is in a pass-through connection with the target device;
in response to the first priority being higher than the second priority, releasing (S230) first pass-through binding between the second virtual machine and the target device; and
sending (S240) a migration message to the first virtual machine, to instruct the first virtual machine to perform a second pass-through binding to the target device.

2. The device migration method according to claim 1, further comprising:
in response to the first priority being lower than the second priority, detecting (S310) whether the second virtual machine is using the target device;
in a case where the second virtual machine is using the target device, releasing (S320) the first pass-through binding between the second virtual machine and the target device after the second virtual machine finishes the use of the target device; and
immediately releasing (S330) the first pass-through binding between the second virtual machine and the target device in a case where the second virtual machine is not using the target device.

3. The device migration method according to claim 1 or 2, wherein the releasing the first pass-through binding between the second virtual machine and the target device comprises:
sending an unbinding instruction to a pass-through module in a virtualization platform, to instruct the pass-through module to release the first pass-through binding based on the unbinding instruction.

4. The device migration method according to claim 3, wherein the sending (S240) a migration message to the first virtual machine, to instruct the first virtual machine to perform a second pass-through binding to the target device comprises:
sending the migration message to the first virtual machine, to instruct the first virtual machine to respond to the migration message and send a binding instruction to the pass-through module in the virtualization platform, so as to instruct the pass-through module to perform the second pass-through binding between the target device and the first virtual machine according to the binding instruction.

5. The device migration method according to claim 1, wherein the transmitting (S210), by a first virtual machine, a request message requesting use of a target device to a second virtual machine comprises:
transmitting, based on a shared storage mechanism by the first virtual machine, the request message requesting the use of the target device to the second virtual machine.

6. The device migration method according to claim 4, wherein the sending an unbinding instruction to a pass-through module in a virtualization platform, to instruct the pass-through module to release the first pass-through binding based on the unbinding instruction comprises:
calling a first driver program to send the unbinding instruction to the pass-through module in the virtualization platform, to instruct the pass-through module to release the first pass-through binding based on the unbinding instruction.

7. The device migration method according to claim 6, wherein the sending the migration message to the first virtual machine, to instruct the first virtual machine to respond to the migration message and send a binding instruction to the pass-through module in the virtualization platform, so as to instruct the pass-through module to perform the second pass-through binding between the target device and the first virtual machine according to the binding instruction comprises:
receiving a first event signal that is sent by the first driver program under triggering of a first interrupt signal, wherein the pass-through module sends the first interrupt signal to the first driver program when the first pass-through binding is successfully released;
in response to the first event signal, sending the migration message to the first virtual machine based on the shared storage mechanism, to instruct the first virtual machine to respond to the migration message and send the binding instruction to the pass-through module in the virtualization platform by calling a second driver program, so as to instruct the pass-through module to perform the second pass-through binding between the target device and the first virtual machine according to the binding instruction; and
receiving, by the first virtual machine, a second event signal that is sent by the second driver program under triggering of a second interrupt signal, and using, by the first virtual machine, the target device in response to the second event signal, wherein the pass-through module sends the second interrupt signal to the second driver program in a case where the second pass-through binding is successfully completed.

8. A device migration apparatus, **characterized in that** the apparatus comprises:
a transmission module (701), configured to transmit, by a first virtual machine, a request message requesting use of a target device to a second virtual machine;
a comparison module (702), configured to compare a first priority for the first virtual machine to use the target device and a second priority for the second virtual machine to use the target device in a case where the second virtual machine is in a pass-through connection with the target device;
a pass-through release module (703), configured to, in response to the first priority being higher than the second priority, release first pass-through binding between the second virtual machine and the target device; and
a sending module (704), configured to send a migration message to the first virtual machine, to instruct the first virtual machine to perform a second pass-through binding to the target device.

9. The device migration apparatus according to claim 8, further comprising:
a detection module (705), configured to, in response to the first priority being lower than the second priority, detect whether the second virtual machine is using the target device;
a first processing module (706), configured to release, in a case where the second virtual machine is using the target device, the first pass-through binding between the second virtual machine and the target device after the second virtual machine finishes the use of the target device; and
a second processing module (707), configured to immediately release the first pass-through binding between the second virtual machine and the target device in a case where the second virtual machine is not using the target device.

10. The device migration apparatus according to claim 8 or 9, wherein, when releasing the first pass-through binding between the second virtual machine and the target device, the pass-through release module (703), the first processing module (706), and the second processing module (707) are configured to:
send an unbinding instruction to a pass-through module in a virtualization platform, to instruct the pass-through module to release the first pass-through binding based on the unbinding instruction.

11. The device migration apparatus according to claim 8, wherein the sending module (704) is further configured to:
send the migration message to the first virtual machine, to instruct the first virtual machine to respond to the migration message and send a binding instruction to the pass-through module in the virtualization platform, so as to instruct the pass-through module to perform the second pass-through binding between the target device and the first virtual machine according to the binding instruction.

12. The device migration apparatus according to claim 8, wherein the transmission module (701) is further configured to:
transmit, based on a shared storage mechanism by the first virtual machine, the request message requesting the use of the target device to the second virtual machine.

13. The device migration apparatus according to claim 8 or 9, wherein, when releasing the first pass-through binding between the second virtual machine and the target device, the pass-through release module (703), the first processing module (706), and the second processing module (707) are configured to:
call a first driver program to send the unbinding instruction to the pass-through module in the virtualization platform, to instruct the pass-through module to release the first pass-through binding based on the unbinding instruction.

14. A computer readable storage medium, on which a computer program is stored, wherein the computer program, when executed by a processor, causes the processor to implement the device migration method according to any one of claims 1 to 7.

15. An electronic device (11), **characterized in that** the electronic device comprises:
a processor (111); and
a memory (112), configured to store instructions executable by the processor (111), wherein
the processor (111) is configured to read the executable instructions from the memory (112), and execute the instructions to implement the device migration method according to any one of claims 1 to 7.
